# EUROPÄISCHE PATENTSCHRIFT

(11) **EP 3 818 348 B1**
(45) Veröffentlichungstag und Bekanntmachung des Hinweises auf die Patenterteilung: **17.01.2024**
(21) Anmeldenummer: 19736358.3
(22) Anmeldetag: 02.07.2019
(51) Int. Cl.: G01K 7/02, G01K 7/16, G01K 13/02

(54) **THERMOMETER MIT DIAGNOSEFUNKTION**
THERMOMETER HAVING A DIAGNOSTIC FUNCTION
THERMOMÈTRE COMPRENANT UNE FONCTION DE DIAGNOSTIC

(30) Priorität: 05.07.2018 DE 102018116309
(43) Veröffentlichungstag der Anmeldung: 12.05.2021
(73) Patentinhaber: Endress+Hauser Wetzer GmbH+Co. KG, 87484 Nesselwang (DE)
(72) Erfinder: SCHALLES, Marc, 99097 Erfurt (DE); VRDOLJAK, Pavo, 87484 Nesselwang (DE)
(74) Vertreter: Koslowski, Christine Adelheid
(86) Internationale Anmeldenummer: PCT/EP2019/067759
(87) Internationale Veröffentlichungsnummer: WO 2020/007872

(56) Entgegenhaltungen:
- EP-A1- 0 775 897
- EP-A1- 0 920 609
- EP-B1- 0 775 897
- EP-B1- 0 920 609
- DE-A1-102014 119 593
- US-A- 3 966 500

## Beschreibung

Die Erfindung bezieht sich auf eine Vorrichtung zur Bestimmung und/oder Überwachung einer Temperatur eines Mediums.

Thermometer sind in unterschiedlichsten Ausgestaltungen aus dem Stand der Technik bekannt geworden. So gibt es Thermometer, welche zur Messung der Temperatur die Ausdehnung einer Flüssigkeit, eines Gases oder eines Festkörpers mit bekanntem Ausdehnungskoeffizienten heranziehen, oder auch solche, welche die elektrische Leitfähigkeit eines Materials oder eine davon abgeleitete Größe mit der Temperatur in Zusammenhang bringen, wie beispielsweise den elektrischen Widerstand bei Verwendung von Widerstandselementen oder den thermoelektrischen Effekt im Falle von Thermoelementen. Dagegen wird bei Strahlungsthermometern, insb. Pyrometern, zur Bestimmung der Temperatur einer Substanz deren Wärmestrahlung ausgenutzt. Die jeweils zugrundeliegenden Messprinzipien sind jeweils in einer Vielzahl von Veröffentlichungen beschrieben worden.

Bei einem Temperatursensor in Form eines Widerstandselements sind unter anderem sogenannte Dünnschicht- und Dickschicht-Sensoren sowie sogenannte Heißleiter (auch als NTC-Thermistoren bezeichnet) bekannt geworden. Bei einem Dünnschicht-Sensor, insbesondere einem Resistance Temperature Detector (RTD), kommt beispielsweise ein mit Anschlussdrähten versehenes und auf ein Trägersubstrat aufgebrachtes Sensorelement zum Einsatz, wobei die Rückseite des Trägersubstrats in der Regel metallisch beschichtet ist. Als Sensorelemente werden sogenannte Widerstandselemente, welche beispielsweise durch Platinelemente gegeben sind, verwendet, die unter anderem unter den Bezeichnungen PT10, PT100, und PT1000 auch kommerziell erhältlich sind.

Bei Temperatursensoren in Form von Thermoelementen wiederum wird die Temperatur durch eine Thermospannung bestimmt, die zwischen den einseitig angeschlossenen Thermodrähten aus unterschiedlichen Materialien entsteht. Zur Temperaturmessung werden üblicherweise Thermoelemente nach DIN-Norm IEC584, z.B. Thermoelemente vom Typ K, J, N, S, R, B, T oder E, als Temperaturfühler eingesetzt. Aber auch andere Materialpaare, insbesondere solche mit einem messbaren Seebeck-Effekt, sind möglich.

Die Aufgabe von Thermometern in der Prozessautomatisierung besteht darin, die Temperatur eines Mediums, bzw. eines Prozessmediums, zuverlässig und möglichst genau zu bestimmen. In der Praxis besteht hierbei das Problem, dass der jeweils verwendete Temperatursensor durch mehrere thermische Widerstände vom Medium getrennt ist. Diese kommen beispielsweise durch die einzelnen Komponenten des Thermometers, sowie ggf. durch das Behältnis, in welchen sich das Medium befindet, beispielsweise ein Behälter oder eine Rohrleitung, zustande. Häufig ist der Temperatursensor Teil eines sog. Messeinsatzes, welcher ein Mantelelement, welches einen Füllstoff und den darin eingebetteten Temperatursensor umgibt, umfasst. In diesem Falle ergeben sich serielle thermische Widerstände beispielsweise durch den Mantel und den Füllstoff.

Umfasst das Thermometer ferner beispielsweise ein Schutzrohr, so kommen weitere serielle thermische Widerstände durch das Schutzrohr selbst, sowie die thermische Kopplung zwischen dem Schutzrohr und dem Messeinsatz zustande. Eine entscheidende Rolle bei der Erreichung eines thermischen Ausgleichs zwischen dem Prozessmedium und der Umgebung bzw. dem Thermometer spielt die Wahl der Länge des Schutzrohrs und des Messeinsatzes. Ist/sind das Schutzrohr und/oder der Messeinsatz zu kurz, so kann es dazu kommen, dass im Bereich des Temperatursensors ein Temperaturgradient auftritt. Ein solcher Temperaturgradient hängt einerseits von der Differenz der Temperatur des Mediums bzw. der Prozesstemperatur und der Umgebungstemperatur ab. Andererseits spielen aber auch die Wärmeleitfähigkeiten der jeweils verwendeten Komponenten des Thermometers, der thermischen Kopplungen zwischen den einzelnen Komponenten sowie unterschiedliche Prozessparameter, wie beispielsweise eine Durchflussgeschwindigkeit des Prozessmediums o. ä. eine entscheidende Rolle.

Eine weitere Ursache für das Auftreten von Temperaturgradienten im Bereich des Temperatursensors liegt in der Bildung von Ablagerungsschichten und/oder Korrosion am Thermometer, beispielsweise am Schutzrohr oder Messeinsatz, insbesondere im Bereich des Temperatursensors. Das Bilden von Ablagerungen oder das Auftreten von Korrosion führt zu einer Veränderung, insbesondere einer Verschlechterung, der thermischen Kopplung zwischen dem Medium und der jeweils mit dem Medium in Kontakt kommenden Komponente des Thermometers, beispielsweise dem Schutzrohr oder Mantelelement.

Aufgrund derartiger Temperaturgradienten im Bereich des Temperatursensors kann es unabhängig von der exakten Ursache für den Gradienten zu erheblichen Messwertverfälschungen kommen.

Um derartige Messwertverfälschungen zu vermeiden, ist es beispielsweise bekannt geworden, anhand von drei äquidistanten Temperatursensoren den wahren Temperaturwert zu bestimmen (Klaus Irrgang, Lothar Michalowsky: Temperaturmesspraxis, ISBN-13: 978380272204). Dieses Vorgehen erfordert allerdings eine vergleichsweise komplexe Konstruktion und Signalauswertung.

Aus der DE102014119593A1 ist ein Thermometer bekannt geworden, dass die Detektion eines Temperaturgradienten entlang der Anschlussleitungen ermöglicht. Als Temperatursensor kommt ein Widerstandselement in der sog. 4-Leiterschaltung zum Einsatz. An einem der Anschlussdrähte wird ein Stück der Anschlussleitung durch ein anderes Material ersetzt, so dass aus dieser und einer weiteren Anschlussleitung ein Differenzthermoelement gebildet wird. Sobald an dem aus zwei Elementen bzw. zwei Materialien bestehenden Anschlussdraht ein Temperaturgradient auftritt, entsteht eine Thermospannung, die Aufschluss über den Temperaturgradienten entlang der Anschlussdrähte gibt. Dieser Temperaturgradient betrifft aber lediglich den Verlauf der Anschlussdrähte. Über etwaige direkt im Bereich des Temperatursensors auftretende Temperaturgradienten können keine direkten Aussagen getätigt werden.

EP 0 775 897 A1, US 3 966 500 A und EP 0 920 609 A1 offenbaren jeweils eine Temperaturfühleranordnung mit einem Widerstandselement, dessen Anschlussdrähte mit der Messstelle eines Thermoelements leitend kontaktiert sind.

Der vorliegenden Erfindung liegt somit die Aufgabe zugrunde, ein Thermometer mit möglichst hoher Messperformance, insbesondere mit hoher Messgenauigkeit, anzugeben.

Diese Aufgabe wird gelöst durch die Vorrichtung gemäß Anspruch 1. Vorteilhafte Ausgestaltungen sind jeweils in den abhängigen Ansprüchen angegeben.

Die der Erfindung zugrundeliegende Aufgabe wird gelöst durch eine Vorrichtung zur Bestimmung und/oder Überwachung der Temperatur eines Mediums, umfassend einen Temperatursensor mit einem temperaturempfindlichen Sensorelement, und zumindest eine erste und eine zweite Anschlussleitung, wobei das Sensorelement über zumindest die erste und die zweite Anschlussleitung elektrisch kontaktiert ist. Die erste Anschlussleitung ist in einen ersten und einen zweiten Abschnitt unterteilt, wobei der erste dem Sensorelement zugewandte Abschnitt aus einem ersten Material besteht, und wobei der zweite dem Sensorelement abgewandte Abschnitt aus einem zweiten sich von dem ersten unterscheidenden Material besteht, während die zweite Anschlussleitung ebenfalls aus dem zweiten Material besteht. Der erste Abschnitt der ersten Anschlussleitung und zumindest ein Teil der zweiten Anschlussleitung bilden dann einen ersten Differenz-Temperatursensor in Form eines Thermoelements. Bei dem temperaturempfindlichen Sensorelement des Temperatursensors handelt es sich um ein Widerstandselement, wobei der Temperatursensor weiterhin ein Substrat umfassen kann, auf dem das Widerstandselement angeordnet ist, und wobei die erste Anschlussleitung und die zweite Anschlussleitung direkt an das Widerstandselement oder an ein Substrat, auf welchem das als Widerstandselement ausgebildete Sensorelement angeordnet ist, angebracht ist, so dass mittels des ersten Differenz-Temperatursensors ein Temperaturgradient direkt am Ort des Temperatursensors erfassbar ist.

Erfindungsgemäß handelt es sich bei dem ersten Differenz-Temperatursensor im Prinzip um einen Wärmestromsensor nach dem thermoelektrischen Prinzip, mittels welchem ein Temperaturgradient bzw. Wärmestrom am Ort des Temperatursensors erfassbar ist. Tritt im Bereich des Temperatursensors ein Temperaturgradient auf, so kommt es zu einer Messwertverfälschung der mittels des Temperatursensors ermittelten Temperaturwerte. In diesem Falle kann mittels des ersten Differenz-Temperatursensors eine Thermospannung detektiert werden. Vorteilhaft kann so der Temperaturgradient direkt am Ort des Temperatursensors erfasst werden, also an dem Ort, an welchem die Temperaturbestimmung und/oder -überwachung erfolgt. Die beiden ersten Abschnitte der ersten und zweiten Anschlussleitung können einerseits direkt miteinander verbunden und gemeinsam an dem Temperatursensor angebracht sein. In diesem Fall bietet sich insbesondere ein erster Temperatursensor in Form eines Thermoelements an. Ebenso ist es möglich, dass die erste und zweite Anschlussleitung separat an dem Temperatursensor angebracht werden. Im zweiten Fall können die ersten Abschnitte der ersten und zweiten Anschlussleitung dann beispielsweise vermittels des Temperatursensors elektrisch miteinander verbunden sein.

Die beiden Anschlussleitungen dienen einerseits der Kontaktierung des Temperatursensors. Zumindest der erste Abschnitt der ersten Anschlussleitung und zumindest ein Teil der zweiten Anschlussleitung bilden gleichzeitig den ersten Differenz-Temperatursensor, mittels welchem ein Wärmestrom im Bereich des Temperatursensors detektierbar ist.

Erfindungsgemäß handelt es sich es sich bei dem temperaturempfindlichen Sensorelement des Temperatursensors um ein Widerstandselement. Je nach der Art und Ausgestaltung des Widerstandselements können die erste und zweite Anschlussleitung, bzw. die ersten Abschnitte der ersten und zweiten Anschlussleitung, dann direkt an das Widerstandselement oder auch an ein Substrat, auf welchem das Widerstandselement angeordnet ist, angebracht sein. Die Kontaktierung kann also beispielsweise sowohl über das Sensorelement, als auch über ein Substrat, auf welchem das Sensorelement angeordnet ist, erfolgen. Es ist ebenfalls möglich, zumindest einen Teilbereich zumindest einer Anschlussleitung, insbesondere den ersten Teil zumindest einer der Anschlussleitungen auf dem Substrat anzuordnen. Im Falle einer Ausgestaltung des Widerstandselements als Dünn- oder Dickschicht-Sensor kann dann vorteilhaft der zumindest eine Teilbereich zumindest einer der Anschlussleitungen, welcher auf dem Substrat angeordnet ist, gemeinsam mit dem Sensorelement in einem Dünn- oder Dickschichtverfahren hergestellt werden.

In einer weiteren Ausgestaltung der Vorrichtung ist die zweite Anschlussleitung in einen ersten, dem Sensorelement zugewandten Abschnitt, und einen zweiten, dem Sensorelement abgewandten Abschnitt unterteilt. Der erste Differenz-Temperatursensor wird in diesem Fall durch die ersten Abschnitte der ersten und zweiten Anschlussleitung gebildet. Die zweiten Abschnitte der ersten und zweiten Anschlussleitung können dagegen sogenannte Verlängerungsdrähte sein, welche mit den ersten Abschnitten der beiden Anschlussleitungen verbindbar sind.

Eine besonders bevorzugte Ausgestaltung beinhaltet, dass der erste Abschnitt der ersten Anschlussleitung und der erste Abschnitt der zweiten Anschlussleitung oder zumindest der Teil der zweiten Anschlussleitung derart dimensioniert sind, insbesondere wobei eine Länge, eine Querschnittsfläche und/oder ein Material derart gewählt ist/sind, dass Werte für einen ersten Wärmestrom durch den ersten Abschnitt der ersten Anschlussleitung und/oder durch die erste Anschlussleitung und für einen zweiten Wärmestrom durch den ersten Abschnitt der zweiten Anschlussleitung, den Teil der zweiten Anschlussleitung und/oder die zweite Anschlussleitung im Wesentlichen gleich sind.

Indem die Anschlussleitungen, bzw. Abschnitte der Anschlussleitungen passend dimensioniert werden, kann erreicht werden, dass die Wärmeströme entlang der beiden Anschlussleitungen im Wesentlichen identisch sind. Auf diese Weise kann eine Verfälschung der Messwerte durch den ersten Differenz-Temperatursensor deutlich reduziert werden. Beispielsweise können diejenigen Abschnitte der Anschlussleitungen, welche aus dem zweiten Material bestehen, insbesondere die zweite Anschlussleitung und der zweite Abschnitt der ersten Anschlussleitung, gleich ausgestaltet werden, während der erste Abschnitt der ersten Anschlussleitung passend dimensioniert wird. Im Falle einer Unterteilung der zweiten Anschlussleitung in einen ersten und zweiten Abschnitt können aber beispielsweise auch der erste und zweite Abschnitt unterschiedlich dimensioniert sein, während die zweiten Abschnitte der ersten und zweiten Anschlussleitung gleich dimensioniert sind. In dieser Hinsicht sind viele unterschiedliche Varianten denkbar, welche allesamt unter die vorliegende Erfindung fallen.

Es ist von Vorteil, wenn der erste Abschnitt der ersten Anschlussleitung und der erste Abschnitt der zweiten Anschlussleitung im Wesentlichen die gleiche Länge aufweisen. Dies erlaubt insbesondere auf einfache Weise ein Verbinden der ersten Abschnitte der Anschlussleitungen mit den die Verlängerungsdrähte bildenden zweiten Abschnitten.

Eine weitere bevorzugte Ausgestaltung beinhaltet, dass die Vorrichtung zumindest eine dritte Anschlussleitung zur elektrischen Kontaktierung des Temperatursensors umfasst. Hier sind viele unterschiedliche Ausgestaltungen denkbar, welche allesamt unter die vorliegende Erfindung fallen. Sowohl die zweite als auch die dritte Anschlussleitung können beispielsweise mit der ersten Anschlussleitung den ersten Differenz-Temperatursensor bilden. Ebenso ist es denkbar, den Temperatursensor in einer sogenannten Zweileiter- oder Dreileiterschaltung zu betreiben.

Es ist bezüglich einer Ausgestaltung mit drei Anschlussleitungen von Vorteil, wenn die dritte Anschlussleitung in einen ersten, dem Sensorelement zugewandten Abschnitt, und in einen zweiten, dem Sensorelement abgewandten Abschnitt, unterteilt ist, wobei der erste Abschnitt der dritten Anschlussleitung aus dem ersten oder einem dritten Material besteht, wobei der zweite Abschnitt der dritten Anschlussleitung aus dem zweiten Material besteht, und wobei der erste Abschnitt der dritten Anschlussleitung und zumindest ein Teil der zweiten Anschlussleitung einen zweiten Differenz-Temperatursensor in Form eines Thermoelements bilden. Der zweite Differenz-Temperatursensor kann dann ebenfalls zur Detektion eines Wärmestroms, insbesondere im Bereich des Temperatursensors, verwendet werden. Der erste und zweite Differenz-Temperatursensor können einerseits identisch ausgestaltet sein. Es ist aber ebenso denkbar, die beiden Differenz-Temperatursensoren unterschiedlich auszugestalten. Hierzu können beispielsweise die ersten Abschnitte der ersten und dritten Anschlussleitungen unterschiedlich dimensioniert werden, beispielsweise mit Hinblick auf die Länge, den Querschnitt, oder das jeweils verwendete Material.

In einer weiteren besonders bevorzugten Ausgestaltung umfasst die Vorrichtung zumindest eine vierte Anschlussleitung zur elektrischen Kontaktierung des Temperatursensors. Auch in dieser Hinsicht sind viele unterschiedliche Ausgestaltungen denkbar, welche allesamt unter die vorliegende Erfindung fallen. Sowohl die zweite, die dritte oder auch die vierte Anschlussleitung können beispielsweise mit der ersten Anschlussleitung den ersten Differenz-Temperatursensor bilden. Die gleichen Überlegungen gelten für einen ggf. vorhanden zweiten Differenz-Temperatursensor. Ebenso ist es denkbar, den Temperatursensor in einer sogenannten Zweileiter-, Dreileiter-, oder Vierleiterschaltung zu betreiben.

Es ist von Vorteil, wenn die vierte Anschlussleitung in einen ersten, dem Sensorelement zugewandten Abschnitt, und in einen zweiten, dem Sensorelement abgewandten Abschnitt, unterteilt ist/sind, wobei der erste Abschnitt der vierten Anschlussleitung aus dem ersten, dem dritten oder einem vierten Material besteht, wobei der zweite Abschnitt der vierten Anschlussleitung aus dem zweiten Material besteht, und wobei der erste Abschnitt der vierten Anschlussleitung und zumindest ein Teil der zweiten oder dritten Anschlussleitung einen dritten Differenz-Temperatursensor in Form eines Thermoelements bilden. Der dritte Differenz-Temperatursensor kann dann ebenfalls zur Detektion eines Wärmestroms, insbesondere im Bereich des Temperatursensors, verwendet werden. Der erste, zweite und/oder dritte Differenz-Temperatursensor können einerseits identisch ausgestaltet sein. Es ist aber ebenso denkbar, zumindest zwei der zumindest drei Differenz-Temperatursensoren unterschiedlich auszugestalten. Hierzu können beispielsweise die ersten Abschnitte der ersten, dritten und/oder vierten Anschlussleitungen unterschiedlich dimensioniert werden, beispielsweise mit Hinblick auf die Länge, den Querschnitt, oder das jeweils verwendete Material.

Eine bevorzugte Ausgestaltung beinhaltet beispielsweise, dass eine Länge des ersten Abschnitts der dritten und/oder vierten Anschlussleitung sich von der Länge des ersten Abschnitts der ersten Anschlussleitung unterscheidet.

In einer Ausgestaltung umfasst die erfindungsgemäße Vorrichtung eine Elektronik, welche dazu ausgestaltet ist, eine an dem ersten, zweiten und/oder dritten Differenz-Temperatursensor abfallende erste, zweite und/oder dritte Thermospannung zu detektieren.

In dieser Hinsicht ist es von Vorteil, wenn die Elektronik dazu ausgestaltet ist, anhand der ersten, zweiten und/oder dritten Thermospannung einen Wärmestrom, insbesondere eine Wärmeableitung, des Temperatursensors zu ermitteln. Entsteht an dem ersten, zweiten und/oder dritten Differenz-Temperatursensor beispielsweise keine Thermospannung, so kann darauf geschlossen werden, dass im Bereich des Temperatursensors kein Temperaturgradient auftritt. Eine Verfälschung eines mittels des Temperatursensors gewonnen Messwerts für die Temperatur des Mediums aufgrund von Wärmeströmen im Bereich des Temperatursensors kann entsprechend ausgeschlossen werden.

Es ist ebenso von Vorteil, wenn die Elektronik dazu ausgestaltet ist, anhand der ersten, zweiten und/oder dritten Thermospannung eine Ablagerung an einer mediumsberührenden Komponente des Thermometers, insbesondere an einem Schutzrohr, zu erkennen. Bilden sich im fortlaufenden Betrieb Ablagerungen an dem Thermometer, so hat dies einen ggf. erheblichen Einfluss auf die thermischen Eigenschaften des Thermometers, insbesondere auf die thermische Kopplung zwischen dem Medium und dem Thermometer und können damit eine Ursache für auftretende Temperaturgradienten im Bereich des Temperatursensors sein.

Es ist weiterhin von Vorteil, wenn die Elektronik dazu ausgestaltet ist, anhand der ersten, zweiten und/oder dritten Thermospannung eine Aussage über eine physikalische und/oder chemische Eigenschaft des Mediums, beispielsweise einen Durchfluss, eine Strömungsgeschwindigkeit oder eine spezifische Wärmekapazität, oder einen Wärmeübergangskoeffizienten, einen Wärmestrom des Mediums oder eine Änderung in der Zusammensetzung des Mediums zu bestimmen. Auch hier bewirkt eine Änderung einer dieser Größen eine Änderung der thermischen Kopplung zwischen Medium und Thermometer und kann damit eine Ursache für einen auftretenden Temperaturgradienten im Bereich des Temperatursensors sein.

Die Erfindung wird anhand der nachfolgenden Zeichnungen näher erläutert. Es zeigt:
Fig. 1: eine schematische Darstellung eines Thermometers gemäß Stand der Technik mit einem Temperatursensor in Form eines Widerstandselements,
Fig. 2: eine schematische Darstellung eines erfindungsgemäßen Thermometers mit zwei Anschlussleitungen in unterschiedlichen Ausgestaltungen,
Fig. 3: eine schematische Darstellung eines erfindungsgemäßen Thermometers mit drei Anschlussleitungen in unterschiedlichen Ausgestaltungen, und
Fig. 4: eine schematische Darstellung eines erfindungsgemäßen Thermometers mit vier Anschlussleitungen in unterschiedlichen Ausgestaltungen.

In den Figuren sind gleiche Merkmale mit gleichen Bezugszeichen gekennzeichnet.

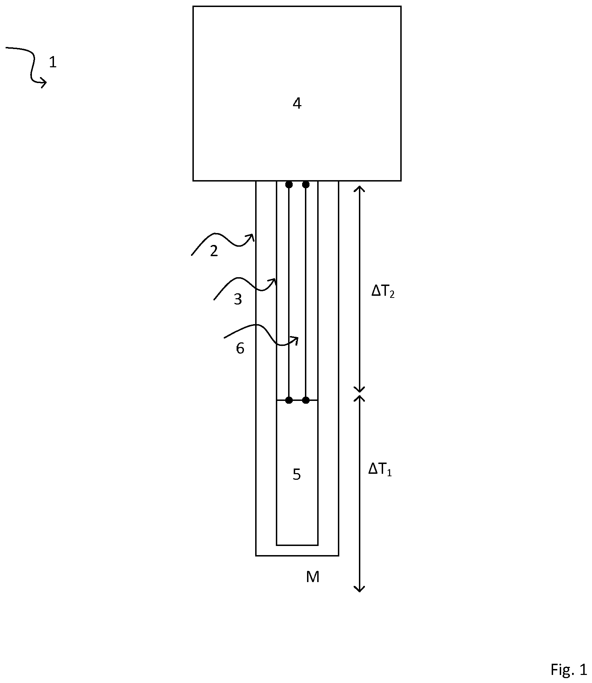

In Fig.1 ist eine schematische Abbildung eines Thermometers 1 mit einem Eintauchkörper 2, beispielsweise einem Schutzrohr, einem Messeinsatz 3, und einer Elektronik 4 gemäß Stand der Technik gezeigt. Der Messeinsatz 3 ist in den Eintauchkörper 2 eingebracht und umfasst einen Temperatursensor 5, welcher im vorliegenden Fall ein temperatursensitives Element in Form eines Widerstandselements umfasst. Der Temperatursensor ist über die Anschlussleitungen 6 elektrisch kontaktiert und mit der Elektronik 4 verbunden. In anderen Ausgestaltungen kann die Elektronik 4 auch separat vom Messeinsatz 3 und Eintauchkörper 2 angeordnet sein. Auch muss es sich bei dem Sensorelement 5 nicht notwendigerweise um ein Widerstandselement handeln, oder die Anzahl der verwendeten Anschlussleitungen 6 muss nicht notwendigerweise zwei betragen. Vielmehr kann die Anzahl der Anschlussleitungen 6 je nach angewendetem Messprinzip und verwendetem Temperatursensor passend gewählt werden.

Wie bereits dargelegt, hängt die Messgenauigkeit eines Thermometers 1 in hohem Maße von den jeweiligen Materialien und, insbesondere thermischen, Kontaktierungen, insbesondere im Bereich des Temperatursensors 5 ab. Der Temperatursensor 5 steht mittelbar, d.h. über den Eintauchkörper 2, mit dem Medium M in thermischem Kontakt. Der Temperatursensor 5 ist also durch mehrere thermische Widerstände vom Medium M getrennt. Es kann deshalb je nach Prozessbedingungen und/oder der jeweiligen konstruktiven Ausgestaltung des Thermometers dazu kommen, dass zwischen dem Medium M und dem Thermometer zumindest zeitweise und/oder teilweise kein thermisches Gleichgewicht herrscht. In Folge des Fehlens eines thermischen Gleichgewichts können beispielsweise im Bereich des Temperatursensors 5 oder auch entlang der Anschlussleitungen 6 Temperaturgradienten ΔT₁ oder ΔT₂ entstehen, die aufgrund resultierender Wärmeströme die jeweils mit dem Temperatursensor 5 gemessenen Temperaturwerte verfälschen.

Besonders relevant sind in diesem Zusammenhang Temperaturgradienten ΔT₁ im Bereich des Temperatursensors 5. Die vorliegende Erfindung ermöglicht deshalb die Detektion solcher Temperaturgradienten. Dies führt zu einer deutlich verbesserten Messgenauigkeit des Thermometers.

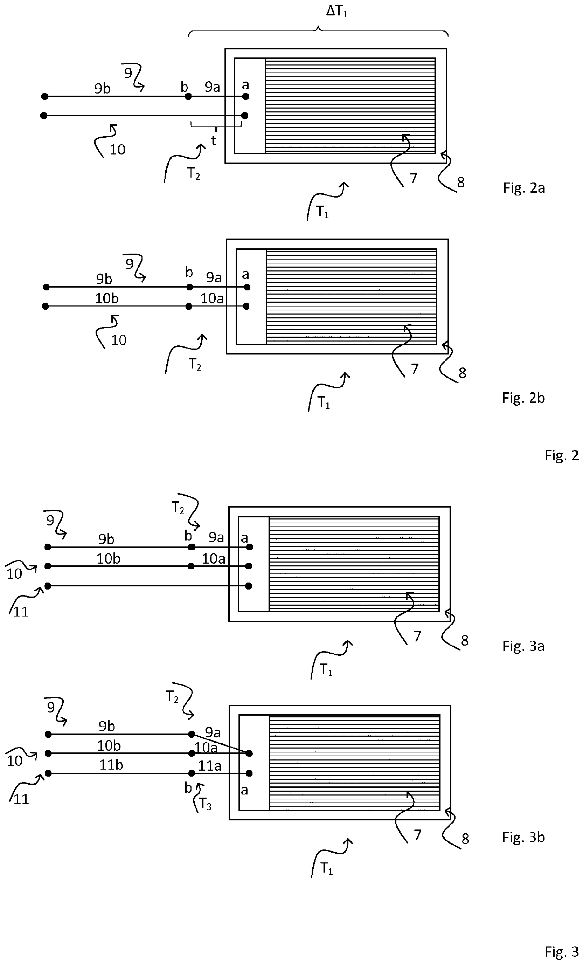

Eine erste Ausgestaltung eines erfindungsgemäßen Thermometers ist in Fig. 2 gezeigt. Ein Temperatursensor T₁ in Form eines auf ein Substrat 8 aufgebrachten Widerstandselements 7 dient der Bestimmung und/oder Überwachung der Temperatur T des Mediums M. Der Temperatursensor T₁ ist mittels der beiden Anschlussleitungen 9 und 10 elektrisch kontaktiert und wird somit in der sogenannten Zweileiter-Schaltung betrieben. Im vorliegenden Falle sind beide Anschlussleitungen 9 und 10 direkt an das Widerstandselement 7 angebracht. Es sei aber an dieser Stelle darauf verwiesen, dass alle dem Fachmann bekannten Kontaktierungen zur Verbindung des ersten Temperatursensors T₁ mit den Anschlussleitungen 9 und 10 ebenfalls möglich sind und unter die vorliegende Erfindung fallen.

Die erste Anschlussleitung 9 ist in einen ersten 9a und einen zweiten Abschnitt 9b unterteilt. Der erste Abschnitt 9a besteht dabei aus einem ersten Material, und der zweite Abschnitt 9b sowie die zweite Anschlussleitung 10 bestehen aus einem zweiten sich vom ersten unterscheidenden Material. Auf diese Weise bilden der erste Abschnitt 9a der ersten Anschlussleitung 9 und zumindest ein Teil t der zweiten Anschlussleitung 10 einen ersten Differenz-Temperatursensor T₂ in Form eines Thermoelements. Die beiden Materialien für den ersten Abschnitt 9a der ersten Anschlussleitung 9 und den zweiten Abschnitt 9b der ersten Anschlussleitung sowie für die zweite Anschlussleitung 10 werden derart gewählt, dass aufgrund einer Temperaturdifferenz zwischen den Punkten a und b, und den sich entsprechend aufgrund des thermoelektrischen Effekts in den Abschnitten 9a und t ausbildenden unterschiedlichen Thermospannungen, mittels T₂ eine Thermospannung detektierbar ist.

Der erste Abschnitt 9a der ersten Anschlussleitung 9 ist bevorzugt kurz im Vergleich zur Gesamtlänge der ersten Anschlussleitung 9, beispielsweise liegt die Länge des ersten Abschnitts 9a der ersten Anschlussleitung 9 im Bereich von wenigen Millimetern oder Zentimetern. Auf diese Weise kann sichergestellt werden, dass die mittels des ersten Differenz-Temperatursensors T₂ ermittelten Werte möglichst einen Temperaturgradienten ΔT₁ im Bereich des Temperatursensors T₁ wiederspiegeln.

Bei dem in Fig. 2a gezeigten Beispiel sind die erste 9 und zweite Anschlussleitung 10 separat an das Widerstandselement angebracht. Der erste Abschnitt 9a der ersten Anschlussleitung 9 und der Teil t der zweiten Anschlussleitung 10 sind also mittelbar über das Widerstandselement 7 verbunden. In einer anderen Ausgestaltung könnte der erste Abschnitt 9a der ersten Anschlussleitung 9 und der Teil t der zweiten Anschlussleitung 10 aber auch direkt miteinander verbunden und dann an den Temperatursensor T₁ angebracht sein. Es versteht sich ferner von selbst, dass anstelle des hier für alle Figuren beispielhaft gezeigten Temperatursensors T₁ mit einem Sensorelement in Form eines Widerstandselements 7 auch andere dem Fachmann wohlbekannte Temperatursensoren zum Einsatz kommen können und auch unter die vorliegende Erfindung fallen.

In der in Fig. 2b gezeigten Ausgestaltung ist auch die zweite Anschlussleitung 10 in einen ersten 10a und einen zweiten Abschnitt 10b unterteilt. Der erste Differenz-Temperatursensor T₂ ist in diesem Fall durch die ersten Abschnitte 9a und 10a der ersten 9 und zweiten 10 Anschlussleitungen gebildet. Gemäß Fig. 2b, aber nicht notwendigerweise, sind die beiden ersten Abschnitte 9a und 10a der beiden Anschlussleitungen 9 und 10 gleich lang. Bei den zweiten Abschnitten 9b und 10b der ersten 9 und zweiten 10 Anschlussleitungen handelt es sich in diesem Fall um, vorzugsweise gleichartig ausgestaltete, Verlängerungsdrähte. Aber auch im Falle der Ausgestaltung gemäß Fig. 2a ist es von Vorteil, wenn der zweite Abschnitt 9b der ersten Anschlussleitung 9 und die zweite Anschlussleitung 10 gleichartig ausgestaltet sind.

In Fig. 3 sind beispielhaft zwei unterschiedliche Ausgestaltungen einer erfindungsgemäßen Vorrichtung 1 gezeigt, bei denen der Temperatursensor T₁ mittels drei Anschlussleitungen 9-11 verbunden ist. Die beiden gezeigten Ausgestaltungen sind nur exemplarisch zu verstehen. Es gibt zahlreiche alternative Ausgestaltungen einer erfindungsgemäßen Anordnung mit drei Anschlussleitungen 9-11, die ebenfalls möglich sind.

Gemäß Fig. 3a ist der Temperatursensor T₁ mittels der drei Anschlussleitungen 9-11 verbunden. Bis auf die dritte Anschlussleitung 11 entspricht diese Ausgestaltung der in Fig. 2b gezeigten Variante. Auf bereits erläuterte Elemente wird deshalb an dieser Stelle nicht erneut eingegangen. Durch die Verwendung von drei Anschlussleitungen 9-11 kann der Temperatursensor T₁ vorteilhaft in der sogenannten Dreileiter-Schaltung betrieben werden. Vorzugsweise besteht die dritte Anschlussleitung 11 für diese Ausgestaltung aus dem gleichen Material wie die zweite Anschlussleitung 10 und wie der zweite Abschnitt 9b der ersten Anschlussleitung 9.

Eine weitere beispielhafte Ausgestaltung einer erfindungsgemäßen Vorrichtung 1 mit drei Anschlussleitungen 9-11 ist Gegenstand von Fig. 3b. Im Gegensatz zu Fig. 3a sind die ersten Abschnitte der ersten 9a und zweiten 10b Anschlussleitungen, welche den ersten Differenz-Temperatursensor T₂ bilden, direkt miteinander verbunden. Außerdem ist die dritte Anschlussleitung 11 ebenfalls in einen ersten 11a und zweiten Abschnitt 11b unterteilt. Das Material des ersten Abschnitts 11a der dritten Anschlussleitung 11 unterscheidet sich von dem Material des ersten Abschnitts 10a der zweiten Anschlussleitung 10 derart, dass diese einen zweiten Differenz-Temperatursensor T₃, ebenfalls in Form eines Thermoelements, bilden. Der zweite Differenz-Temperatursensor T₃ kann aber auch analog zur in Fig. 2a dargestellten ohne eine Unterteilung der zweiten Anschlussleitung 10 in zwei Abschnitte 10a und 10b gebildet werden. Dabei können die Materialien, aus welchen die ersten Abschnitte 9a und 11a der ersten 9 und dritten Anschlussleitungen 11 sowohl gleich also auch verschieden sein.

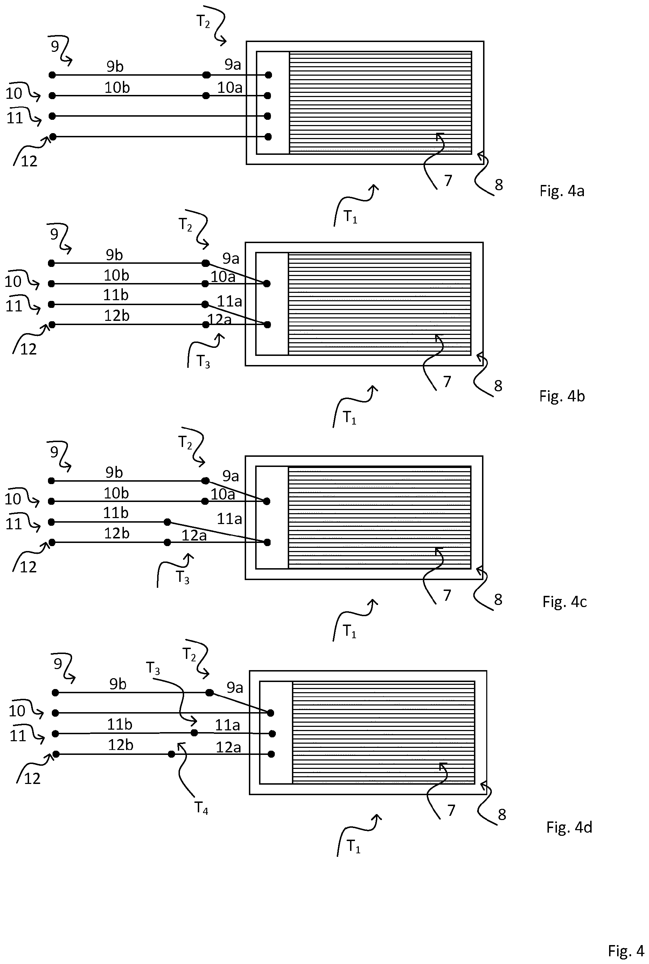

Vier verschiedene ebenfalls beispielhaft zu verstehende Ausgestaltungen eines erfindungsgemäßen Thermometers 1 mit 4 Anschlussleitungen 9-12 sind schließlich in Fig. 4 gezeigt. Die in Fig. 4a gezeigte Variante entspricht größtenteils der in Fig. 3a gezeigten Variante. Auf bereits erläuterte Elemente wird deshalb auch hier nicht erneut eingegangen. Zusätzlich zu Fig. 3a umfasst die Ausgestaltung gemäß Fig. 4b eine vierte Anschlussleitung 12. Durch die Verwendung von vier Anschlussleitungen 9-12 kann der Temperatursensor T₁ vorteilhaft in der sogenannten Vierleiter-Schaltung betrieben werden. Vorzugsweise besteht die vierte Anschlussleitung 12 für diese Ausgestaltung aus dem gleichen Material wie die zweite 10 und dritte Anschlussleitung 11 und wie der zweite Abschnitt 9b der ersten Anschlussleitung 9.

Eine weitere mögliche Ausgestaltung ist in Fig. 4b gezeigt. Bezüglich der ersten 9 und zweiten Anschlussleitung 10 entspricht diese Ausgestaltung der in Fig. 3b gezeigten. Die vierte Anschlussleitung 12 ist hier, ebenso wie anderen Anschlussleitungen 9-11 in einen ersten 12a und einen zweiten Abschnitt 12b unterteilt. Die dritte 11 und vierte Anschlussleitung 12 sind analog zur ersten 9 und zweiten Anschlussleitung 10 ausgestaltet, wobei die ersten Abschnitte 11a und 12a der dritten 11 und vierten Anschlussleitungen 12 den zweiten Differenz-Temperatursensor T₃ bilden. In anderen Ausgestaltungen können der erste T₂ und zweite Differnez-Temperatursensor T₃ auch gemäß den Ausführungen aus den Figuren Fig. 2a oder Fig. 2b ausgestaltet sein.

Für die Ausgestaltung gemäß Fig. 4b sei beispielhaft angenommen, dass die Materialien des zweiten Abschnitts 9b der ersten Anschlussleitung 9, der zweiten Anschlussleitung 10, des zweiten Abschnitts 11a der dritten Anschlussleitung 11, sowie der vierten Anschlussleitung 12 gleich sind, während die ersten Abschnitte 9a und 11a der ersten 9 und dritten Anschlussleitungen 9 und 11 sich davon unterscheiden. Dabei können wiederum die Materialien der ersten Abschnitte 9a und 11a jeweils gleich oder unterschiedlich sein.

Grundsätzlich können, ähnlich wie im Falle der Fig. 3, der erste T₂ und zweite Differenz-Temperatursensor T₃ gleichartig oder unterschiedlich ausgestaltet sein. Beispielsweise kann ein Unterschied zwischen dem der ersten T₂ und zweiten Differenz-Temperatursensor T₃ durch eine unterschiedliche Länge der ersten Abschnitte 9a und 10a der ersten 9 und zweiten Anschlussleitungen 10 und der ersten Abschnitte 11a und 12a der dritten 11 und vierten Anschlussleitungen 12 erreicht werden, wie in Fig. 4c gezeigt. Eine Variation der Querschnitte der Abschnitte 9a-12a ist ebenfalls denkbar.

Eine weitere beispielhafte Ausgestaltung ist Gegenstand von Fig. 4d. Bezüglich der ersten 9 und zweiten Anschlussleitung 10 entspricht diese Ausgestaltung ebenfalls der in Fig. 3b gezeigten. Die dritte 11 und vierte Anschlussleitung 12 sind ebenfalls jeweils in zwei Abschnitte 11a und 11b bzw. 12a und 12b unterteilt, jedoch separat mit dem Widerstandselement 7 verbunden. Dier ersten Abschnitte 9a, 11a und 12a der ersten 9, dritten 11 und vierten Anschlussleitung 12 sind unterschiedlich lang und bilden jeweils mit einem der jeweiligen Länge des ersten Abschnitts 9a, 11a, 12a entsprechenden Teil t der zweiten Anschlussleitung einen ersten T₂, zweiten T₃ und dritten Differenz-Temperatursensor T₄.

Für die Ausgestaltung gemäß Fig. 4d sei beispielhaft angenommen, dass die Materialien der zweiten Abschnitte 9b, 11b und 12b der ersten 9, dritten 11 und vierten Anschlussleitung 12, sowie der zweiten Anschlussleitung 10 gleich sind, während die ersten Abschnitte 9a, 11a und 12a der ersten 9, dritten 11 und vierten Anschlussleitungen 12 sich davon unterscheiden. Dabei können wiederum die Materialien der ersten Abschnitte 9a, 11a und 12a jeweils gleich oder zumindest teilweise unterschiedlich sein.

### Bezugszeichenliste

- 1: Vorrichtung
- 2: Eintauchkörper
- 3: Messeinsatz
- 4: Elektronik
- 5: Sensorelement
- 6: Anschlussdrähte
- 7: Widerstandselement
- 8: Substrat
- 9-12: erste-vierte Anschlussleitung
- 9a-12a: erste Abschnitte der Anschlussleitungen
- 9b-12b: zweite Abschnitte der Anschlussleitungen

- M: Medium
- T: Temperatur
- T₁-T₄: Temperatursensoren
- ΔT₁, ΔT₂: Temperaturgradienten

## Patentansprüche

1. Vorrichtung (1) zur Bestimmung und/oder Überwachung der Temperatur (T) eines Mediums (M), umfassend
einen Temperatursensor (T₁) mit einem temperaturempfindlichen Sensorelement (7), und zumindest eine erste (9) und eine zweite Anschlussleitung (10), wobei das Sensorelement (7) über zumindest die erste (9) und die zweite Anschlussleitung (10) elektrisch kontaktiert ist,
wobei die erste Anschlussleitung (9) in einen ersten (9a) und einen zweiten Abschnitt (9b) unterteilt ist,
wobei der erste dem Sensorelement (7) zugewandte Abschnitt (9a) aus einem ersten Material besteht, und wobei der zweite dem Sensorelement (7) abgewandte Abschnitt (9b) aus einem zweiten sich von dem ersten unterscheidenden Material besteht, wobei die zweite Anschlussleitung (10) aus dem zweiten Material besteht,
und wobei der erste Abschnitt (9a) der ersten Anschlussleitung (9) und zumindest ein Teil (t) der zweiten Anschlussleitung (10) einen ersten Differenz-Temperatursensor (T₂) in Form eines Thermoelements bilden,
wobei es sich bei dem temperaturempfindlichen Sensorelement (7) des Temperatursensors (T₁) um ein Widerstandselement handelt, wobei der Temperatursensor weiterhin ein Substrat umfassen kann, auf dem das Widerstandselement angeordnet ist,
und wobei die erste Anschlussleitung (9) und die zweite Anschlussleitung (10) direkt an das Widerstandselement oder an das Substrat, auf welchem das als Widerstandselement ausgebildete Sensorelement (7) angeordnet ist, angebracht sind, so dass mittels des ersten Differenz-Temperatursensors (T₂) ein Temperaturgradient direkt am Ort des Temperatursensors (T₁) erfassbar ist.

2. Vorrichtung (1) nach Anspruch 1,
wobei die zweite Anschlussleitung (10) in einen ersten (10a), dem Sensorelement (7) zugewandten Abschnitt, und einen zweiten, dem Sensorelement (7) abgewandten Abschnitt (10b) unterteilt ist.

3. Vorrichtung (1) nach zumindest einem der vorherigen Ansprüche,
wobei der erste Abschnitt (9a) der ersten Anschlussleitung (9) und der erste Abschnitt (10a) der zweiten Anschlussleitung (10) oder zumindest der Teil (t) der zweiten Anschlussleitung (10) derart dimensioniert sind, insbesondere wobei eine Länge, eine Querschnittsfläche und/oder ein Material derart gewählt ist/sind, dass Werte für einen ersten Wärmestrom durch den ersten Abschnitt (9a) der ersten Anschlussleitung (9) und/oder durch die erste Anschlussleitung (9) und für einen zweiten Wärmestrom durch den ersten Abschnitt (10a) der zweiten Anschlussleitung (10), den Teil (t) der zweiten Anschlussleitung (10) und/oder die zweite Anschlussleitung (10) im Wesentlichen gleich sind.

4. Vorrichtung (1) nach Anspruch 3,
wobei der erste Abschnitt (9a) der ersten Anschlussleitung (9) und der erste Abschnitt (10a) der zweiten Anschlussleitung (10) im Wesentlichen die gleiche Länge aufweisen.

5. Vorrichtung (1) nach zumindest einem der vorherigen Ansprüche,
umfassend zumindest eine dritte Anschlussleitung (11) zur elektrischen Kontaktierung des Temperatursensors (T₁).

6. Vorrichtung (1) nach Anspruch 5,
wobei die dritte Anschlussleitung (11) in einen ersten, dem Sensorelement zugewandten Abschnitt (11a), und in einen zweiten, dem Sensorelement abgewandten Abschnitt (11b), unterteilt ist, wobei der erste Abschnitt (11a) der dritten Anschlussleitung (11) aus dem ersten oder einem dritten Material besteht, wobei der zweite Abschnitt (11b) der dritten Anschlussleitung (11) aus dem zweiten Material besteht, und
wobei der erste Abschnitt (11a) der dritten Anschlussleitung (11) und zumindest ein Teil (t) der zweiten Anschlussleitung (10) einen zweiten Differenz-Temperatursensor (T₃) in Form eines Thermoelements bilden.

7. Vorrichtung (1) nach zumindest einem der Ansprüche 5 oder 6,
umfassend zumindest eine vierte Anschlussleitung (12) zur elektrischen Kontaktierung des Temperatursensors (T₁).

8. Vorrichtung (1) nach Anspruch 7,
wobei die vierte Anschlussleitung (12) in einen ersten, dem Sensorelement (7) zugewandten Abschnitt (12a), und in einen zweiten, dem Sensorelement (7) abgewandten Abschnitt (12b), unterteilt ist/sind, wobei der erste Abschnitt (12a) der vierten Anschlussleitung (12) aus dem ersten, dem dritten oder einem vierten Material besteht, wobei der zweite Abschnitt (12b) der vierten Anschlussleitung (12) aus dem zweiten Material besteht, und
wobei der erste Abschnitt (12a) der vierten Anschlussleitung (12) und zumindest ein Teil (t) der zweiten (10) oder dritten Anschlussleitung (11) einen dritten (T₄) Differenz-Temperatursensor in Form eines Thermoelements bilden.

9. Vorrichtung (1) nach einem der Ansprüche 5 bis 8,
wobei eine Länge des ersten Abschnitts (11a, 12a) der dritten (11) und/oder vierten Anschlussleitung (12) sich von der Länge des ersten Abschnitts (9a) der ersten Anschlussleitung (9) unterscheidet.

10. Vorrichtung (1) nach zumindest einem der vorherigen Ansprüche,
umfassend eine Elektronik (4), welche dazu ausgestaltet ist, eine an dem ersten (T₂), zweiten (T₃) und/oder dritten Differenz-Temperatursensor (T₄) abfallende erste, zweite und/oder dritte Thermospannung zu detektieren.

11. Vorrichtung (1) nach Anspruch 10,
wobei die Elektronik (4) dazu ausgestaltet ist, anhand der ersten, zweiten und/oder dritten Thermospannung einen Wärmestrom, insbesondere eine Wärmeableitung, des Temperatursensors (T₁) zu ermitteln.

## Claims

1. Device (1) for determining and/or monitoring the temperature (T) of a medium (M), comprising
a temperature sensor (T₁) with a temperature-sensitive sensor element (7) and at least one first (9) and one second connection cable (10), wherein the sensor element (7) is electrically connected via at least the first (9) and the second connection cable (10),
wherein the first connection cable (9) is subdivided into a first (9a) and a second section (9b),
wherein the first section (9a) facing the sensor element (7) comprises a first material and wherein the second section (9b) facing away from the sensor element (7) comprises a second material that differs from the first material, wherein the second connection cable (10) is produced from the second material,
and wherein the first section (9a) of the first connection cable (9) and at least one part (t) of the second connection cable (10) establish a first differential temperature sensor (T₂) in the form of a thermal element,
wherein the temperature-sensitive sensor element (7) of the temperature sensor (T₁) is a resistance element, wherein the temperature sensor can also encompass a substrate on which the resistance element is arranged,
and wherein the first connection cable (9) and the second connection cable (10) are connected directly to the resistance element or to the substrate on which the sensor element (7) that is produced as a resistance element is arranged, so that a temperature gradient can be recorded directly in the location of the temperature sensor (T₁) using the first differential temperature sensor (T₂).

2. Device (1) according to claim 1,
wherein the second connection cable (10) is subdivided into a first section (10a) that faces the sensor element (7) and a second section (10b) that faces away from the sensor element (7).

3. Device (1) according to at least one of the preceding claims,
wherein the first section (9a) of the first connection cable (9) and the first section (10a) of the second connection cable (10) or at least the part (t) of the second connection cable (10) are dimensioned in such a way, in particular wherein a length, a cross-sectional area and/or a material is/are selected in such a way that values for a first heat flow through the first section (9a) of the first connection cable (9) and/or through the first connection cable (9), as well as for a second heat flow through the first section (10a) of the second connection cable (10), the part (t) of the second connection cable (10), and/or the second connection cable (10) are essentially the same.

4. Device (1) according to claim 3,
wherein the first section (9a) of the first connection cable (9) and the first section (10a) of the second connection cable (10) essentially exhibit the same length.

5. Device (1) according to at least one of the preceding claims,
comprising at least a third connection cable (11) for electrical connection of the temperature sensor (T₁).

6. Device (1) according to claim 5,
wherein the third connection cable (11) is subdivided into one first section (11a) that faces the sensor element and one second section (11b) that faces away from the sensor element, wherein the first section (11a) of the third connection cable (11) is produced from the first or a third material, wherein the second section (11b) of the third connection cable (11) is produced from the second material, and
wherein the first section (11a) of the third connection cable (11) and at least one part (t) of the second connection cable (10) establish a second differential temperature sensor (T₃) in the form of a thermal element.

7. Device (1) according to at least one of the claims 5 or 6,
comprising at least a fourth connection cable (12) for electrical connection of the temperature sensor (T₁).

8. Device (1) according to claim 7,
wherein the fourth connection cable (12) is subdivided into one first section (12a) that faces the sensor element and one second section (12b) that faces away from the sensor element, wherein the first section (12a) of the fourth connection cable (12) is produced from the first, the third, or a fourth material, wherein the second section (12b) of the fourth connection cable (11) is produced from the second material, and
wherein the first section (12a) of the fourth connection cable (12) and at least one part (t) of the second (10) or third connection cable (11) establish a third differential temperature sensor (T₄) in the form of a thermal element.

9. Device (1) according to one of the claims 5 to 8,
wherein a length of the first section (11a,12a) of the third (11) and/or fourth connection cable (12) differs from the length of the first section (9a) of the first connection cable (9).

10. Device (1) according to at least one of the preceding claims,
comprising electronics (4) that are configured to detect a falling first, second, and/or third thermoelectric voltage on the first (T₂), second (T₃), and/or third differential temperature sensor (T₄).

11. Device (1) according to claim 10,
wherein the electronics (4) are configured to determine a heat flow, in particular heat dissipation, of the temperature sensor (T₁) based on the first, second, and/or third thermoelectric voltage.

## Revendications

1. Dispositif (1) destiné à la détermination et/ou à la surveillance de la température (T) d'un produit (M), lequel dispositif comprend
un capteur de température (T₁) avec un élément capteur (7) sensible à la température, et
au moins une première (9) et une deuxième ligne de raccordement (10), l'élément capteur (7) étant en contact électrique par l'intermédiaire d'au moins la première (9) et la deuxième ligne de raccordement (10),
la première ligne de raccordement (9) étant divisée en un premier (9a) et un deuxième tronçon (9b),
le premier tronçon (9a) tourné vers l'élément capteur (7) étant constitué d'un premier matériau, et le deuxième tronçon (9b) opposé à l'élément capteur (7) étant constitué d'un deuxième matériau différent du premier,
la deuxième ligne de raccordement (10) étant constituée du deuxième matériau, et le premier tronçon (9a) de la première ligne de raccordement (9) et au moins une partie (t) de la deuxième ligne de raccordement (10) formant un premier capteur de température différentiel (T₂) sous la forme d'un thermocouple, l'élément capteur (7), sensible à la température, du capteur de température (T₁) étant un élément résistif, le capteur de température pouvant en outre comprendre un substrat sur lequel est disposé l'élément résistif,
et la première ligne de raccordement (9) et la deuxième ligne de raccordement (10) étant fixées directement à l'élément résistif ou au substrat sur lequel est disposé l'élément capteur (7) réalisé sous forme d'élément résistif, de sorte qu'un gradient de température peut être détecté directement à l'endroit du capteur de température (T₁) au moyen du premier capteur de température différentiel (T₂).

2. Dispositif (1) selon la revendication 1,
pour lequel la deuxième ligne de raccordement (10) est divisée en un premier tronçon (10a) tourné vers l'élément capteur (7) et un deuxième tronçon (10b) opposé à l'élément capteur (7).

3. Dispositif (1) selon au moins l'une des revendications précédentes,
pour lequel le premier tronçon (9a) de la première ligne de raccordement (9) et le premier tronçon (10a) de la deuxième ligne de raccordement (10) ou au moins la partie (t) de la deuxième ligne de raccordement (10) sont dimensionnés de manière telle, notamment une longueur, une surface de section transversale et/ou un matériau étant choisi(s) de manière telle, que des valeurs pour un premier flux thermique à travers le premier tronçon (9a) de la première ligne de raccordement (9) et/ou à travers la première ligne de raccordement (9) et pour un deuxième flux thermique à travers le premier tronçon (10a) de la deuxième ligne de raccordement (10), la partie (t) de la deuxième ligne de raccordement (10) et/ou la deuxième ligne de raccordement (10), sont pour l'essentiel égales.

4. Dispositif (1) selon la revendication 3,
pour lequel le premier tronçon (9a) du premier câble de raccordement (9) et le premier tronçon (10a) du deuxième câble de raccordement (10) présentent pour l'essentiel la même longueur.

5. Dispositif (1) selon au moins l'une des revendications précédentes,
lequel dispositif comprend au moins une troisième ligne de raccordement (11) pour la mise en contact électrique du capteur de température (T₁).

6. Dispositif (1) selon la revendication 5,
pour lequel la troisième ligne de raccordement (11) est divisée en un premier tronçon (11a) tourné vers l'élément capteur, et en un deuxième tronçon (11b) opposé à l'élément capteur, le premier tronçon (11a) de la troisième ligne de raccordement (11) étant constitué du premier ou d'un troisième matériau, le deuxième tronçon (11b) de la troisième ligne de raccordement (11) étant constitué du deuxième matériau, et
le premier tronçon (11a) de la troisième ligne de raccordement (11) et au moins une partie (t) de la deuxième ligne de raccordement (10) formant un deuxième capteur de température différentiel (T₃) sous la forme d'un thermocouple.

7. Dispositif (1) selon au moins l'une des revendications 5 ou 6,
lequel dispositif comprend au moins une quatrième ligne de raccordement (12) pour la mise en contact électrique du capteur de température (T₁).

8. Dispositif (1) selon la revendication 7,
pour lequel la quatrième ligne de raccordement (12) est divisée en un premier tronçon (12a) tourné vers l'élément capteur (7), et en un deuxième tronçon (12b) opposé à l'élément capteur (7), le premier tronçon (12a) de la quatrième ligne de raccordement (12) étant constitué du premier, du troisième ou d'un quatrième matériau, le deuxième tronçon (12b) de la quatrième ligne de raccordement (12) étant constitué du deuxième matériau, et
le premier tronçon (12a) de la quatrième ligne de raccordement (12) et au moins une partie (t) de la deuxième (10) ou de la troisième ligne de raccordement (11) formant un troisième capteur de température différentiel (T4) sous la forme d'un thermocouple.

9. Dispositif (1) selon l'une des revendications 5 à 8,
pour lequel une longueur du premier tronçon (11a, 12a) de la troisième (11) et/ou de la quatrième ligne de raccordement (12) est différente de la longueur du premier tronçon (9a) de la première ligne de raccordement (9).

10. Dispositif (1) selon au moins l'une des revendications précédentes,
lequel dispositif comprend une électronique (4) conçue pour détecter une première, deuxième et/ou troisième tension thermoélectrique chutant aux bornes du premier (T₂), deuxième (T₃) et/ou troisième capteur de température différentiel (T₄).

11. Dispositif (1) selon la revendication 10,
pour lequel l'électronique (4) est conçue pour déterminer un flux thermique, notamment une dissipation thermique, du capteur de température (T₁) à l'aide de la première, de la deuxième et/ou de la troisième tension thermoélectrique.
